# EUROPÄISCHE PATENTANMELDUNG

(11) **EP 4 016 204 A1**
(43) Veröffentlichungstag der Anmeldung: **22.06.2022**
(21) Anmeldenummer: 20214172.7
(22) Anmeldetag: 15.12.2020
(51) Int. Cl.: G05B 17/02

(54) **VERFAHREN UND SYSTEME ZUR SIMULATION VON ANTRIEBSGERÄTEN**

(71) Anmelder: Siemens Aktiengesellschaft, 80333 München (DE)
(72) Erfinder: Neugebauer, Christian, 90419 Nürnberg (DE); Schäfer, Martin, 04416 Markkleeberg (DE)

(57) **Zusammenfassung**

Die Erfindung betrifft ein computerimplementiertes Verfahren zum Bereitstellen eines zeitabhängigen Simulationsmodells eines Antriebsgeräts (1), wobei das Antriebsgerät eine elektrische Maschine (3) und eine der elektrischen Maschine zugeordnete Versorgungseinheit umfasst, wobei
- (S1) ein Funktionsumfang des zeitabhängigen Simulationsmodells (100, 101) definiert wird,
- (S2) ein virtuelles Abbild des Antriebsgeräts (1) bereitgestellt wird, wobei das virtuelle Abbild modular aufgebaut ist, wobei jedes Modul (M1, M2, M3, M4, M5, M6, M60, M61, M62, M63, M64, M65, M66, M67, M68) des virtuellen Abbildes konfigurierbar ist,
- (S3) um das zeitabhängige Simulationsmodell (100, 101) des Antriebsgeräts (1) mit dem definierten Funktionsumfang festzulegen, entsprechend dem Funktionsumfang wenigstens ein Modul (M1, M2, M3, M4, M5, M6, M60, M61, M62, M63, M64, M65, M66, M67, M68) des virtuellen Abbildes ausgewählt und das wenigstens eine Modul (M1, M2, M3, M4, M5, M6, M60, M61, M62, M63, M64, M65, M66, M67, M68) hinsichtlich seines Detaillierungsgrades konfiguriert wird.

## Beschreibung

Die Erfindung betrifft ein computerimplementiertes Verfahren zum Bereitstellen eines zeitabhängigen Simulationsmodells eines Antriebsgeräts, wobei das Antriebsgerät eine elektrische Maschine, beispielsweise eine elektrische rotatorische Maschine, insbesondere einen Motor und eine der elektrischen Maschine zugeordnete Versorgungseinheit, die eine Regelungseinrichtung, beispielsweise einen Umrichter, insbesondere einen Servo-, Niederspannungs- oder Frequenzumrichter umfasst, wobei
- ein Funktionsumfang des zeitabhängigen Simulationsmodells definiert wird,
- ein virtuelles Abbild des Antriebsgeräts bereitgestellt wird.

Die elektrische Maschine, insbesondere der Motor, kann dabei mehrachsig ausgebildet sein, wobei jede Achse von der Regelungseinrichtung gesteuert werden kann. Die Regelungseinrichtung kann als eine Baueinheit ausgebildet sein.

Darüber hinaus betrifft die Erfindung ein computergestütztes Verfahren zur Simulation des Verhaltens eines Antriebsgeräts in einer Umgebung.

Außerdem betrifft die Erfindung eine Verwendung eines zeitabhängigen Simulationsmodell, welches gemäß dem vorgenannten Verfahren bereitgestellt wurde. Die Verwendung betrifft insbesondere Verwendung zum Zweck der Simulation des Verhaltens des Antriebsgeräts.

Des Weiteren betrifft die Erfindung ein Computerprogramm mit Befehlen, die beim Ausführen des Computerprogramms durch einen Computer diesen dazu veranlassen, das vorgenannte Verfahren zum Bereitstellen eines zeitabhängigen Simulationsmodells auszuführen.

Ferner betrifft die Erfindung ein System, insbesondere eine Engineering-Plattform, die Mittel zur Ausführung zumindest eines der oben genannten Computer implementierten Verfahren umfasst.

Obendrein betrifft die Erfindung ein computerlesbares Speichermedium mit dem vorgenannten Computerprogramm und einen Datenstrom, der so angepasst ist, dass er das vorgenannte Computerprogramm überträgt.

Computerimplementierte Verfahren und zeitabhängige Simulationsmodelle der Antriebsgeräte der oben genannten Art sind aus dem Stand der Technik bekannt. Beim Bereitstellen eines zeitabhängigen Simulationsmodells steht man fast immer vor einem Dilemma: einerseits ist es kundenseitig erwünscht, dass die simulative Abbildung (das Simulationsmodell) von Antriebsgeräten (oft eine Kombination von einem Frequenzumrichter und einem elektrischen Motor) einfach bedienbar und/oder parametrierbar ist, andererseits wird von dem Simulationsmodell ein bestimmter Funktionsumfang erwartet - z.B. nur so genau wie notwendig das Verhalten des Antriebsgeräts simuliert. Auf diese Weise können viele Simulationsmodelle entstehen, wobei unterschiedliche Modelle unterschiedlichen Funktionsumfang bei einer geringen funktionalen Schnittmenge haben. Eine technische Lösung kann sich somit häufig nur sehr kundenspezifisch darstellen, da man im Kern nur den Teil eines Simulationsmodells variieren will, der im Fokus der Untersuchung liegt. Bisher gibt es also keine allgemeine technische Lösung, sondern nur die Abbildung der Geräte in spezifischen Simulationstools entweder in einer konkreten funktionalen Ausprägung oder mit einem minimalen Funktionsumfang, um einen breiten Anwenderkreis abzudecken. In anderen Worten ist ein Simulationsmodell nach dem Stand der Technik entweder eine mehr oder weniger exakte Abbildung der realen Firmware oder ein spezifischer Nachbau von nur wenigen Teilaspekten.

Die Aufgabe der vorliegenden Erfindung kann somit darin gesehen werden, Verfahren und Systeme bereitzustellen, welche ein flexibles, von einem definierten Funktionsumfang abhängiges Bereitstellen der Simulationsmodelle von Antriebsgeräten ermöglichen.

Die Aufgabe der Erfindung wird mit einem computerimplementierten Verfahren der oben genannten Art erfindungsgemäß dadurch gelöst, dass das virtuelle Abbild modular aufgebaut ist und vorzugsweise wenigstens zwei unterschiedliche Module umfasst, wobei jedes Modul des virtuellen Abbildes konfigurierbar ist, wobei, um das zeitabhängige Simulationsmodell des Antriebsgeräts mit dem definierten Funktionsumfang festzulegen, entsprechend dem Funktionsumfang wenigstens ein, vorzugsweise mehrere Module des virtuellen Abbildes ausgewählt und - ebenfalls entsprechend dem Funktionsumfang - das eine oder mehrere Module hinsichtlich ihren Detaillierungsgrades, beispielsweise über eine Konfigurationsschnittstelle des zeitabhängigen Simulationsmodells konfiguriert werden. Hierdurch wird die gewünschte Flexibilität bei der Bereitstellung des zeitabhängigen Simulationsmodells ermöglicht bzw. erhöht. Ein Bediener kann je nach seinem Interessenschwerpunkt ein oder mehrere Module des virtuellen Abbildes des Antriebsgeräts auswählen und hinsichtlich ihren Detaillierungsgrades konfigurieren, um auf diese Weise beispielsweise die Performance des zeitabhängigen Simulationsmodells zu optimieren.

Das virtuelle Abbild kann somit als ein Modell des Antriebsgeräts angesehen werden, das den maximalen Funktionsumfang und beispielsweise den maximalen Detailierungsgrad aufweist.

Mit der Erfindung wird dem Bediener einer Automatisierungsanlage oder eines Prozessleitsystems ein Werkzeug an die Hand gegeben, mit dem er reale Antriebsgeräte in einem von ihm bestimmten Umfang und in einem von ihm bestimmten, von dem Umfang abhängigen Detaillierungsgrad simulieren kann. Die vorgenannte Flexibilität und Konfigurierbarkeit des Modells bringt den Vorteil, dass der Bediener schneller simulieren kann, weil er nicht das Ganze reale Antriebsgerät simulieren muss, sondern nur jene Aspekte, für die er sich gerade interessiert.

Dem Bediener wird somit ein Baukastensystem (modulares virtuelles Abbild) mit den Modulen, die entsprechende Aspekte/Eigenschaften des realen Antriebgeräts abbilden und sich hinsichtlich ihren Detailierungsgrades (z.B. Anzahl der zu simulierenden Größen/Parametern, Anzahl der Schnittstellen, etc.) konfigurieren lassen.

Mittels zeitabhängiger (oder dynamischer) Simulationen bzw. zeitabhängiger (oder dynamischer) Simulationsmodelle lassen sich abhängig von einer Abtastzeit (Abtastschrittweite) verschiedene Zeitskalen (bzw. Zeitkonstanten) und korrespondierende Frequenzbereiche darstellen - angefangen bei sehr schnellen elektromagnetischen bis hin zu deutlich langsameren elektromechanischen Phänomenen. Um eine gewünschte phänomenologische Zeitkonstante eines Teilaspekts eines zeitabhängigen Simulationsmodells abzubilden, kann die Abtastzeit üblicherweise so gewählt werden, dass diese Faktor 10-20 kleiner ist als die kleinste abzubildende / modellrelevante Zeitkonstante.

Dabei ist im Gegensatz zu zeitunabhängigen Simulationen (auch als statische oder frequenzabhängige Simulation bezeichnet) die Zeit eine monoton steigende Simulationsvariable. Üblicherweise beginnt eine zeitabhängige / zeitbasierte Simulation bei t=0 und schreitet mit einer konstanten oder variablen Abtastzeit fort, bis die vom Anwender festgelegte Simulationsendzeit erreicht ist, wobei es abhängig vom ausgewählten Lösungsverfahren ("Solver") innerhalb eines Abtastschritts möglich ist, dass der gleiche Schritt mehrfach ausgeführt wird ("Iteration"), bis ein definierter zulässiger Fehler erreicht ist.

Das gemäß dem definierten Funktionsumfang bereitgestellte zeitabhängige Simulationsmodell kann ausgeführt werden. Dabei werden jene Aspekte des Antriebsgeräts simuliert, die in dem Funktionsumfang definiert sind.

Das virtuelle Abbild kann beispielsweise spezifische Aspekte, Eigenschaften und Verhalten des realen Antriebsgeräts (entsprechend dem definierten Funktionsumfang) abbilden.

Beim Konfigurieren der Module hinsichtlich ihres Detaillierungsgrads können beispielsweise zu simulierende Effekte und/oder zu berücksichtigende Zeitkonstanten ausgewählt und/oder festgelegt werden. Mit dem Verändern des Detaillierungsgrades eines Moduls verändert sich auch die diesem Modul zugeordnete Parametrierung. Beispielsweise ist es möglich, dass von außen vorgegebene Parameter umgerechnet werden, um einem geringeren Detaillierungsgrad zu genügen.

Bei einer Ausführungsform kann es zweckdienlich sein, wenn das zeitabhängige Simulationsmodell eine Schnittstelle aufweist, mit deren Hilfe das zeitabhängige Simulationsmodell an verschiedener anderer Simulationssoftware gekoppelt werden kann.

Bei einer Ausführungsform kann mit Vorteil vorgesehen sein, dass jedem Modul des virtuellen Abbilds eine detaillierungsgradabhängige Abtastzeit zugeordnet ist. Es ist durchaus vorstellbar, dass einem bestimmten Aspekt des Antriebsgerätes weniger Gewicht als anderen Aspekten zukommt. In diesem Fall kann das Modul, das diesen Aspekt beschreibt, mit einem geringeren Detaillierungsgrad als die anderen Module konfiguriert werden. Hierdurch kann der Performancegewinn im Bezug auf Berechnungsdauer erhöht werden, weil das mit dem geringeren Detaillierungsgrad konfigurierte Modul eine höhere Abtastzeit zulässt.

Die Abtastzeit ist außerhalb des zeitabhängigen Simulationsmodells konstant, kann sich allerdings innerhalb des Simulationsmodells aufgrund des Konfigurierens der Module hinsichtlich ihres Detaillierungsgrades verringern. Um Abtastprobleme zu vermeiden, kann diese Verringerung in ganzzahligen Vielfachen der externen Kommunikationszeit verringern.

Bei einer Ausführungsform kann es vorteilhaft sein, wenn jedes Modul des virtuellen Abbildes mehrere Sub-Module umfasst, wobei jedes Sub-Modul hinsichtlich seines Detaillierungsgrades konfigurierbar ist.

Bei einer Ausführungsform kann es zweckdienlich sein, wenn mehrere unterschiedliche Module des virtuellen Abbildes ausgewählt und hinsichtlich ihres Detaillierungsgrades konfiguriert werden.

Bei einer Ausführungsform kann es zweckmäßig sein, wenn das wenigstens eine Modul zumindest eine Schnittstelle aufweist. Sollten bei der Festlegung des zeitabhängigen Simulationsmodell mehrere Module des virtuellen Abbildes des Antriebsgerätes ausgewählt werden, so können diese miteinander über die dafür vorgesehen Schnittstellen verknüpft werden.

Bei einer Ausführungsform kann mit Vorteil vorgesehen sein, dass das virtuelle Abbild ein Firmware-Modell des Antriebsgeräts und ein Physikmodell des Antriebsgeräts umfasst, wobei das Firmware-Modell und/oder das Physikmodell modular aufgebaut sind/ist, wobei jedes Firmware-Modell-Modul bzw. Physikmodell-Modul konfigurierbar ist. Das Physikmodell kann dabei eine Nachbildung der physikalischen Eigenschaften sein. Das Firmware-Modell ist ein Modell der Firmware des Antriebsgeräts.

Abhängig vom Detaillierungsgrad kann z.B. die Notwendigkeit entfallen, alle Parameter einer Regelung bzw. eines Physikmodells vorzugeben.

Die (echte) Firmware kann hardwaregebundene Software umfassen, die an einem echten/realen Antriebsgerät nicht konfigurierbar bzw. in nur einem begrenzten Umfang konfigurierbar ist. Allerdings kann sie als das in dem virtuellen Abbild enthaltene Modell - Firmware-Modell - durchaus (in einem beliebigen Umfang) konfiguriert werden.

Bei einer Ausführungsform kann es vorteilhaft sein, wenn die Versorgungseinheit eine Regelungseinrichtung umfasst, und das Firmware-Modell ein Modell einer in der Regelungseinrichtung hardwaregebunden hinterlegten Software - ein erstes Modell - und ein Modell einer Regelungseinrichtung-Software - ein zweites Modell - beziehungsweise eine (exakte) Kopie der Regelungseinrichtung-Software umfasst.

Ob das Modell der Regelungseinrichtung-Software ein Simulationsmodell, welches für die (modellbasierte) Entwicklung des Regelungscodes benutzt wird, oder eine Wiederverwendung des kompletten Runtimecodes / des gesamten Firmwarecodes (der höchste Detaillierungsgrad) ist, kann im gesamten zeitabhängigen Simulationsmodell gezielt auf bestimmte Teile der Regelung, die in dem Simulationsmodell durch bestimmte Module des virtuellen Abbildes repräsentiert sind, eingegriffen werden. Dabei kann Detaillierungsgrad der Module im Simulationsmodell angepasst, z.B. verringert werden. Eine solche Verringerung des Detaillierungsgrades ist in einem realen Antriebsgerät nicht möglich, zumal weil die realen Komponenten stets alle physikalischen Domänen enthalten und sie nicht auf nur spezifische Domänen reduzierbar sind.

Kompletter Runtimecodes / der gesamte Firmwarecodes ist der Code in der Form, wie er auch im realen Antriebsgerät zum Einsatz kommt (exakte Kopie des Firmwarecodes).

Die in der Regelungseinrichtung hardwaregebunden hinterlegte Software ist geschützt und nur sehr bedingt konfigurierbar. Durch bereitstellen eines Modells dieser Software wird die Möglichkeit geschaffen, das Verhalten des Antriebgeräts im Rahmen der zeitabhängigen Simulationsmodells in Abhängigkeit von verschiedenen Konfigurationen der softwaregebunden hinterlegten Software zu untersuchen.

Wenn das Firmware-Modell eine exakte Kopie der Regelungseinrichtung-Software umfasst, ist sie so konfigurierbar wie der reale Code. D.h., sie ist nur bis zu dem Grade konfigurierbar, wie der reale Code.

Dabei kann mit Vorteil vorgesehen sein, dass das Physikmodell des Antriebsgeräts modular aufgebaut ist und dass jedes Physikmodell-Modul ein Modell jeweils einer physikalischen Komponente (zum Beispiel eines Leistungsteils, Zwischenkreises, Kabels, passiven Filter, Motors etc.) des Antriebsgeräts ist, wobei vorzugsweise bei jedem Physikmodell-Modul mindestens eine zu simulierende physikalische Domäne (Elektrik, Thermik, Mechanik etc.) auswählbar ist und ein Detaillierungsgrad der Simulation der mindestens einen zu simulierenden physikalischen Domäne konfigurierbar ist.

Das Konfigurieren eines Physikmodell-Moduls kann somit beispielsweise in drei folgenden Stufen erfolgen. Bei einer ersten Stufe wurde ausgewählt welche physikalische Komponente zu simulieren ist. Ein entsprechendes Modul wird dem zeitabhängigen Simulationsmodell hinzugefügt. In einer zweiten Stufe wird ausgewählt welche physikalische Domäne der ausgewählten physikalischen Komponente simuliert werden soll. In einer dritten Stufe wird innerhalb der ausgewählten physikalischen Domäne noch festgelegt, welche Effekte und/oder Zeitkonstanten bei der Simulation zu berücksichtigen sind.

Für die Abtastzeit können sich folgende Vorteile ergeben. Der Zeitschritt, mit dem das zeitabhängige Simulationsmodell intern abgearbeitet werden kann, kann konstant oder auch variabel sein. Die Auswahl eines geringeren Detaillierungsgrads kann zu Laufzeitvorteilen (turnaround time) und somit zu einem Performancegewinn führen, da z.B. kleinere Regelungszeitscheiben nicht ausgeführt werden bzw. die ausgewählten Physikmodell-Module mit einer größeren Abtastung abgearbeitet werden können (abhängig von der kleinsten notwendigen nachzubildenden Zeitkonstante - üblicherweise wählt man die Schrittweite Faktor 10-20 kleiner).

Bei einer Ausführungsform kann es zweckmäßig sein, wenn das Auswählen und das Konfigurieren des wenigstens eines Moduls des virtuellen Abbildes zu einem automatischen Auswählen und Konfigurieren wenigstens eines weiteren, mit dem wenigstens einen Modul zusammenhängenden Moduls des virtuellen Abbildes führt. Hierdurch kann gewährleistet werden, dass das zeitabhängige Simulationsmodell sofort in einer funktionsfähigen Form festgelegt wird. Ausgehend von der Konfiguration bereits ausgewählter Module im Simulationsmodell kann es vorkommen, dass zumindest ein "lowest level of detail" (LLoD) eines weiteren, zusätzlichen Moduls des virtuellen Abbilds notwendig ist. LLoD bezieht sich auf den Detaillierungsgrad dieses Moduls. Sollte das der Fall sein, kann dieses andere Modul automatisch ausgewählt werden. Darüber hinaus ist es denkbar, dass dieses zusätzliche Modul automatisch konfiguriert wird, sodass seine Konfiguration (Detaillierungsgrad seiner Konfiguration) mit der Konfiguration der bereits ausgewählten Module übereinstimmt bzw. zu der Konfiguration der bereits ausgewählten Module passt. Dieser Automatismus kann auch mit einer Reduktion der Abtastzeit einhergehen, wenn die erforderlichen Modelle / Parameter, sprich deren phänomenologische Zeitkonstanten dies erfordern. Dies hängt allerdings davon ab, wie die LLoD-Module ausgestaltet sind. Vorteilhafterweise können die LLoD-Module derart ausgestaltet sein, dass deren Zuschalten die Abtastrate nicht beeinträchtigt oder verbessert / erhöht.

Bei einem LLoD-Detaillierungsgrad kann sich z.B. um einen Detaillierungsgrad handeln, bei dem die Anzahl der für die Beschreibung des Moduls verwendeten Parameter am geringsten ist. Für jede Funktion / jedes Modul kann eine solche Minimalkonfiguration (LLoD) vorgesehen sein, bei der eine Simulation des ganzen Antriebsgeräts immer noch möglich ist.

Somit können durch zusätzliche Module realisierte Funktionen durch das vorgenannte automatische Auswählen und Konfigurieren derart überbrückt werden, dass der Anwender diese Funktionen auch nicht konfigurieren muss, um einen robusten und effizienten Betrieb des zeitbasierten Simulationsmodells zu gewährleisten.

Es ist durchaus denkbar, dass der Anwender über eine entsprechende Konfigurationsschnittstelle über das Hinzukommen der zusätzlichen Module verständigt wird und beispielsweise auf eine Eingabe seitens des Anwenders abgewartet wird. Der Anwender kann dabei beispielsweise zwischen mehreren Optionen wählen, die z.B. eine automatische Konfiguration z.B. mit einem voreingestellten LLoD-Detaillierungsgrad erlauben, oder dem Anwender ermöglichen die zusätzlichen Module selbst weiter zu konfigurieren und vorzugsweise ihren Detaillierungsgrad zu erhöhen.

Zum Beispiel kann das Auswählen eines Moduls, das einen Stromregler beschreibt, das Heranziehen mindestens eines elektrischen Modells des Effektivwertverhaltens des Motors und der Versorgungseinheit nach sich ziehen. D.h., würde ein Stromregler-Simulationsmodul ausgewählt, würde ein LLoD-Modul mitausgewählt, das ein Effektivverhalten des Motors und der Versorgungseinheit abbildet.

Darüber hinaus wird die Aufgabe der Erfindung mit einem eingangs genannten computergestützten Verfahren zur Simulation des Verhaltens eines Antriebsgeräts erfindungsgemäß dadurch gelöst, dass
- ein vorhin beschriebenes zeitabhängiges Simulationsmodell bereitgestellt wird,
- das zeitabhängige Simulationsmodell in ein Umgebungsmodell bzw. in ein Environment-Modell eingebunden bzw. eingebettet wird, um das Verhalten des Antriebsgeräts in der Umgebung zu simulieren.

Des Weiteren wird die Aufgabe der Erfindung erfindungsgemäß dadurch gelöst, dass ein wie oben beschrieben bereitgestelltes Simulationsmodell für die Simulation eines Antriebsgeräts verwendet wird. Dabei kann die Verwendung des zeitabhängigen Simulationsmodells ein Verfahren zum Betreiben eines Antriebsgeräts, bei welchem das Verhalten des Antriebsgeräts mit dem zeitabhängigen Simulationsmodell simuliert wird, und/oder ein Verfahren zum Fehlerbeheben in einem Antriebsgerät vorkommender Fehler, wobei das Verhalten des Antriebsgeräts mittels des zeitabhängigen Simulationsmodells simuliert wird, um beispielsweise mögliche Fehler und/oder Fehlerquellen zu erkennen, und/oder ein Verfahren zur Inbetriebnahme eines Antriebsgeräts, wobei das Verhalten des Antriebsgeräts vor und/oder bei der Inbetriebnahme des Antriebsgeräts mittels des zeitabhängigen Simulationsmodells simuliert wird.

Bei dem vorgenannten Verfahren zum Betreiben eines Antriebsgeräts, kann das Verhalten des Antriebsgeräts mithilfe des zeitabhängigen Simulationsmodells simuliert und entsprechend der Simulation gesteuert werden. Dabei kann die Simulation des Antriebsgeräts ohne dessen Einbetten in ein UmgebungsModell durchgeführt werden. Das zeitabhängige Modell ist ein Standalone-Modell. Der Vorteil dabei ist, dass der Anwender das gleiche Computerprogramm zur Simulation und zur Steuerung des Antriebsgeräts verwenden kann.

Beispielsweise kann es z.B. möglich sein, Antriebsparametern der Control Unit oder eine Untermenge davon (direkt) aus dem realen Antriebsgerät in das zeitabhängige Simulationsmodell zu importieren (z.B. bei einer Störung, um dieser auf den Grund zu gehen) bzw. in das Antriebsgerät zu exportieren (z.B. virtueller Inbetriebnahme des Antriebsgeräts).

Im Folgenden wird die Erfindung anhand der in den Figuren dargestellten Ausführungsbeispiele näher beschrieben und erläutert. Es zeigen:
- FIG 1: ein Flussdiagramm eines computerimplementierten Verfahrens,
- FIG 2: ein Ausführungsbeispiel eines zeitabhängigen Simulationsmodells,
- FIG 3: ein weiteres Ausführungsbeispiel eines zeitabhängigen Simulationsmodells,
- FIG 4: einen möglichen Aufbau eines Moduls des zeitabhängigen Simulationsmodells der FIG 3,
- FIG 5: das zeitabhängige Simulationsmodell der FIG 2 gekoppelt an ein Environment-Modell,
- FIG 6: eine beispielhafte Kopplung des zeitabhängigen Simulationsmodells der FIG 3 an ein Environment-Modell, und
- FIG 7: eine weitere beispielhafte Kopplung des zeitabhängigen Simulationsmodells der FIG 3 an das EnvironmentModell.

In den Ausführungsbeispielen und Figuren können (müssen aber nicht) gleiche oder gleich wirkende Elemente jeweils mit den gleichen Bezugszeichen versehen sein. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

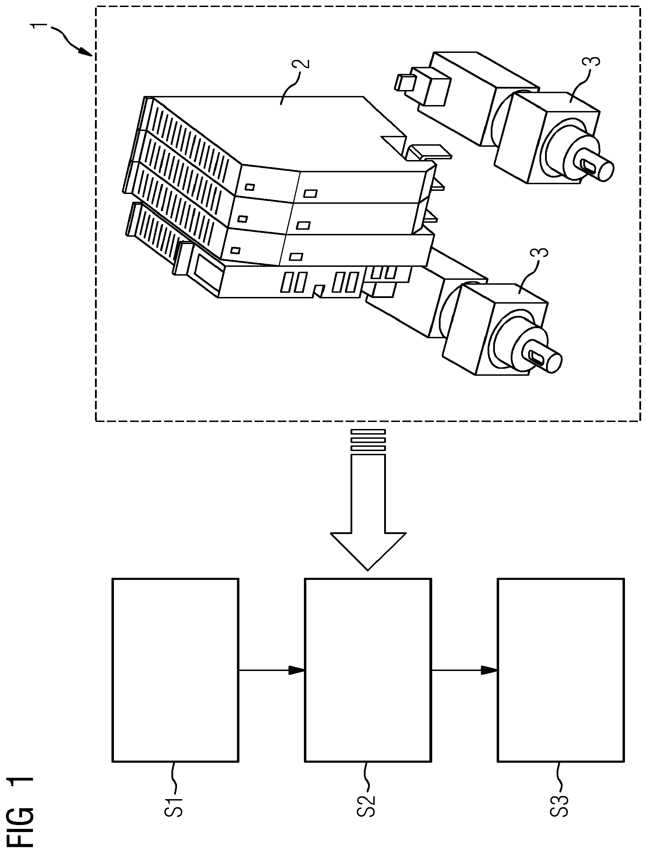

Zunächst wird auf FIG 1 Bezug genommen. Diese zeigt exemplarisch eine mögliche Ausführungsform des computerimplementierten Verfahrens zum Bereitstellen eines zeitabhängigen Simulationsmodells eines Antriebsgeräts 1. Bei einem zeitabhängigen Simulationsmodell werden zeitabhängige Einflüsse und/oder Prozesse berücksichtigt.

Das Antriebsgerät, für welchen das zeitabhängige Simulationsmodell bereitgestellt werden soll, umfasst wenigstens eine elektrische rotatorische Maschine 3, beispielsweise einem Motor und wenigstens eine der elektrischen rotatorischen Maschine zugeordnete Versorgungseinheit. Die Versorgungseinheit kann eine Regelungseinrichtung 2, beispielsweise einen Frequenzumrichter umfassen. Solche Antriebsgeräte werden in Automatisierungstechnik oft als Antriebsstrang (zu engl.: drive train). Beispielsweise besteht das Antriebsgerät 1 aus der Regelungseinrichtung 2 und der wenigstens eine elektrischen rotatorischen Maschine 3.

In einem Schritt S1 wird ein Funktionsumfang des zeitabhängigen Simulationsmodells definiert. D.h., es wird ein Umfang an Funktionen definiert, die das Simulationsmodell des Antriebsgeräts aufweisen soll.

In einem Schritt S2 wird ein virtuelles Abbild des Antriebsgerätes bereitgestellt. Das Digitalisieren des Antriebsgerätes 1 ist mit einem dicken Pfeil in der FIG 1 verdeutlicht.

Das virtuelle Abbild ist modular aufgebaut und enthält mindestens zwei unterschiedliche Module. Dabei ist jedes Modul des virtuellen Abbildes konfigurierbar. Vorzugsweise bildet das virtuelle Abbild spezifische Aspekte / Eigenschaften / Verhalten des realen Antriebsgeräts 1 entsprechend dem definierten Funktionsumfang ab.

Damit das zeitabhängige Simulationsmodell des Antriebsgeräts 1 entsprechend dem definierten Funktionsumfang festgelegt wird, wird in einem Schritt S3 zumindest ein Modul des virtuellen Abbildes, vorzugsweise aber mehrere, beispielsweise drei, vier, fünf oder sechs Module des virtuellen Abbildes ausgewählt und hinsichtlich seines, vorzugsweise ihres Detaillierungsgrades, beispielsweise über eine Kombinationsschnittstelle konfiguriert.

Das Simulationsmodell kann beispielsweise innerhalb eines Computerprogramms bereitgestellt werden.

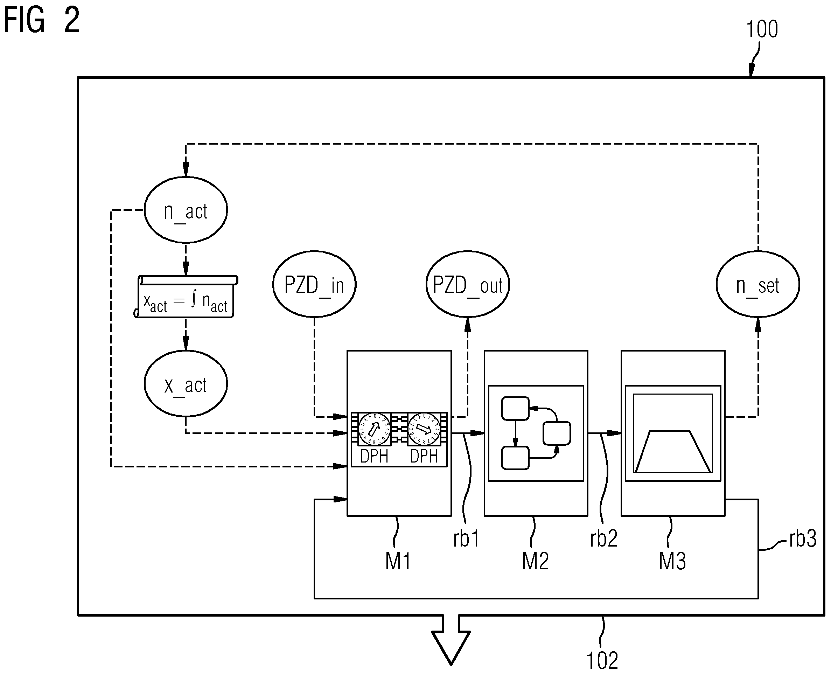

FIG 2 zeigt ein Ausführungsbeispiel eines zeitabhängigen Simulationsmodells des Antriebsgeräts 1. Zur Festlegung des zeitabhängigen Simulationsmodells 100 werden drei Firmware - Modell-Module M1, M2, M3 ausgewählt.

Das Firmware-Modell-Modul M1 kann beispielsweise als ein Modell eines Geräteprofils /einer Schnittstelle, vorzugsweise eines PROFIdrives ausgebildet sein. Das Firmware-Modell-Modul M1 - und auch andere im Rahmen dieser Offenbarung thematisierte Modell-Module - können einen oder mehrere Ein- und/oder Ausgaben-Schnittstellen (Input/Output bzw. I/O) aufweisen. Eine Möglichkeit ein Modul zu konfigurieren ist über I/O-Schnittstellen.

Das Firmware-Modell-Modul M1 kann beispielsweise folgende Parameter über seine Eingabe-Schnittstellen (bspw. vom Bediener) empfangen: Drehzahl-Istwert (n_act, zu engl. "actual"), Positionsistwert (x_act), Prozessdatenwort Eingang zur PLC (PZD_in). Ausgeben kann das Firmware-Modell-Modul M1 beispielsweise ein Prozessdatenwort Ausgang zur PLC (PZD_out). Außerdem lässt FIG 2 erkennen, dass Positionsistwert als Integral des Drehzahl-Istwerts berechnet werden kann.

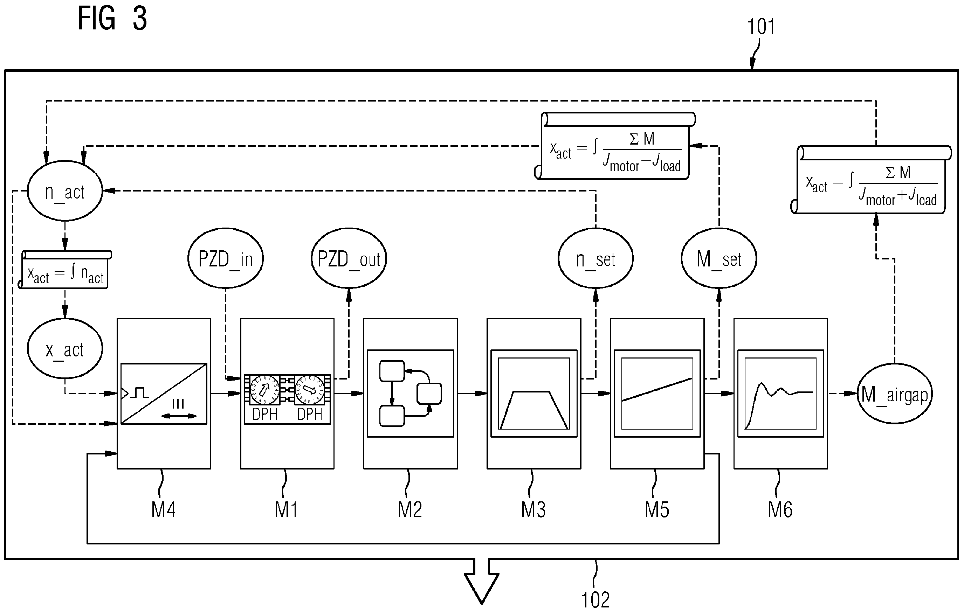

In Figuren 2 und 3 werden die zyklischen I/O-Schnittstellen (Input/Output) mit strichlierten Pfeilen gezeigt.

Es kann durchaus vorkommen, dass nicht alle oder gar keine I/O der einzelnen Module M1, M2, etc. benutzt werden bzw. für den definierten Funktionsumfang des zeitabhängigen Simulationsmodells nicht relevant sind. Dies ist von dem Detaillierungsgrad der einzelnen Module abhängig. Bei geringem Detailgrad können bestimmte I/O z.B. mit einem vereinfachtem Ersatzmodell Outputs mit einer Information belegt werden können. Solche für den definierten Funktionsumfang des zeitabhängigen Simulationsmodells nicht relevante I/O können allerdings bei dem Debugging verwendet werden.

Wenn das zeitabhängige Simulationsmodell keine I/O enthält ist es ein zeitabhängiges Standalone-Modell.

Das Firmware-Modell-Modul M2 kann beispielsweise als eine Zustandsmaschine (zu engl.: "State Machine") ausgebildet sein.

Das Firmware-Modell-Modul M3 kann beispielsweise als ein Sollwertkanal-Modell (zu engl.: setpoint channel model) ausgebildet sein. Über eine Ausgabe-Schnittstelle kann das Firmware-Modell-Modul M3 beispielsweise einen Drehzahl-Sollwert (n_set) ausgeben.

FIG 2 lässt erkennen, dass das zeitabhängige Simulationsmodell 103 drei Eingänge (n_act, x_act, PZD_in) und zwei Ausgänge (PZD_out, n_set) aufweist.

Die vorgenannten Parameter (n_act/set, x_act, PZD_in/out) können als Vektoren ausgebildet sein. Dadurch können Antriebsgeräte modelliert und simuliert werden, bei welchen einem Control Unit (z.B. Frequenzumrichter) mehrere Antriebs- und/oder Motorachsen und/oder Einspeisungen zugeordnet sind.

Jedes der drei Firmware-Modell-Module M1, M2, M3 ist hinsichtlich seines Detaillierungsgrades konfigurierbar. Das bedeutet z.B., dass jedes Modul je nach Bedarf (je nach notwendigem Funktionsumfang) mehr oder weniger genau beschrieben werden kann.

Sollte z.B. einer der Schwerpunkte der Simulation bei der Simulation des Geräteprofils liegen, weil man sich beispielsweise für verschiedene Telegrammarten interessiert, so kann das Firmware-Modell-Modul weitere (hier nicht gezeigte) konfigurierbare Sub-Module umfassen, die beispielsweise weitere Ein- und/oder Ausgabe-Schnittstellen umfassen können, über welche weitere Parameter (z.B. durch einen Bediener) angepasst bzw. eingegeben werden können.

Diese Art Konfigurierbarkeit - Verfeinerung eines Modell-Moduls mit einer zusätzlichen Eingabe von Parameterwerten - betrifft im Rahmen der gegenständlichen Offenbarung jedes Modell-Modul.

Alle drei Firmware-Modell-Module M1, M2, M3 können miteinander verbunden sein (durchzogene Pfeile der Figuren 2 und 3). Die durchzogenen Pfeile rb1, rb2, rb3 zwischen den Modulen M1, M2, M3 simulieren beispielsweise eine Signalverbindung zwischen Modulen eines echten Antriebsgeräts 1.

Um die in FIG 2 gezeigte Regelungsschleife zu schließen, kann beispielsweise der Drehzahl-Sollwert an das Firmware-Modell-Modul M1 gegeben werden, ohne dabei den Drehzahl-Istwert einzugeben.

Die Firmware-Modell-Module M1, M2, M3 gehören einem sogenannten Funktionsplan des Antriebsgeräts (den Antriebsgerätfunktionen) an.

FIG 3 zeigt ein Ausführungsbeispiel eines zeitabhängigen Simulationsmodells des Antriebsgeräts 1. Zur Festlegung des zeitabhängigen Simulationsmodells 101, welches zur Simulation einer Regelungstrecke der rotatorischen Mechanik vorgesehen ist, werden fünf Firmware-Modell-Module M1, M2, M3, M4, M5 und ein Transferfunktion-Modell-Modul M6 ausgewählt. Das zeitabhängige Simulationsmodell 101 kann beispielsweise auf dem zeitabhängigen Simulationsmodell 100 basieren bzw. als dessen Weiterbildung ausgebildet sein.

Das oben Gesagte betreffend Bedeutung der gestrichelten und durchzogenen Pfeile gilt auch in Bezug auf FIG 3.

Das Firmware-Modell-Modul M4 kann beispielsweise als ein Encoder-Evaluation-Modell (Geberauswertung-Modell) ausgebildet sein. Das Encoder-Evaluation-Modell kann Rohdaten eines Drehzahlgebers auswerten, wobei dies im realen Gerät üblicherweise (codierte) Positionswerte bzw. Strichmarken, Geberspuren etc. sind, welche mit der entsprechenden Auflösung des Gebers und der Drehzahl eine bestimmte Abtastschrittweite in der Simulation erfordern würden, welche aber i.d.R. nicht wesentlich zur Erhöhung der Simulationsgüte/ Detailgrad beitragen würden. Daher wird die Geberauswertung üblicherweise durch die direkte Verwendung der Postion (x act) bzw. der Drehzahl (n_act) vereinfacht. Zudem kann das Geberauswertung-Modul eine spezifische "Geberstatemachine" umfassen, welche ein entsprechend der ProfiDrive Spezifikation definiertes Verhalten abbilden kann. Mit diesen Modulen lassen sich beispielsweise die Funktion des Referenzmarken anfahren etc. realisieren.

Das Firmware-Modell-Modul M5 kann beispielsweise als ein Speed-Control-Modell (Drehzahlregler-Modell) ausgebildet sein. Dieses Modul kann eine Regelung eines gemessenen Drehzahlistwerts auf einen (vom Anwender oder der überlagerten Steuerung) geforderten Drehzahlsollwert beinhalten, wobei am Ausgang des Reglers ein Drehmoment berechnet werden kann, welches als Sollmoment auf einen Stromregler geht oder im Modell vorzugsweise auf direkt an den Ausgang des Modells geht (ideales Übertragungsverhalten des Stromregelkreises --> M_set == M_air_gap) oder in eine Übertragungsfunktion des geschlossenen / optimierten Stromregelkreises (= Stromregler + Spannungsstellglied (Versorgungseinheit) + el. Motormodell) geht.

Zudem kann dieses Modul diverse Features der realen Firmware bieten, wie eine Drehzahlvorsteuerung, Zusatzsollwerte, Drehzahlausblendbänder / - filter oder Momentenbegrenzungen etc., um eine höhere Regelgüte zu gewährleisten.

Das Firmware-Modell-Modul M5 kann über einen seiner Ausgabe-Schnittstellen (Outputs) einen Drehmoment-Sollwert (M_set) ausgeben, wobei diese wird zur Schließung der in FIG 3 gezeigten Regelungsschleife verwendet werden kann (siehe den entsprechenden Pfeil), indem der Drehmoment-Sollwert zur Berechnung des Drehzahl-Istwerts gemäß einem konfigurierbaren Lastmodell genutzt wird.

Das Transfer- bzw. Übertragungsfunktion-Modell-Modul M6 kann ein oder mehrere Physikmodell-Module umfassen und beispielsweise einen Luftspaltdrehmomentistwert (M_airgap) ausgeben. In dem Transferfunktion-Modell-Modul M6 kann beispielsweise ein Modell einer geschlossenen Stromregelschleife enthalten sein. Je nach Bedarf kann das Transferfunktion-Modell-Modul M6 detaillierter konfiguriert werden. Beispielsweise kann das Transferfunktion-Modell-Modul M6 ferner ein Stromregler-Modell-Modul und/oder ein Modell-Modul, das elektrisches Motorverhalten beschreibt, umfassen.

Das hier besprochene Physikmodell kann darüber hinaus weitere hier nicht gezeigte Module umfassen, die beispielsweise zu Simulation von (weiteren) elektrischen Effekten, thermischen Effekten (Temperaturmodell), Belüftungsdesign, Rückkühlung bei Motoren, Oberschwingungsverhalten (EMV für Elektromagnetische Verträglichkeit) usw. vorgesehen sind.

Eine Zusammenschau der Figuren 2 und 3 lässt erkennen, dass beide zeitabhängige Simulationsmodelle 100, 101 eine Schnittstelle 102 aufweisen können. Die Schnittstelle 102 ist vorgesehen, um das zeitabhängige Simulationsmodell 100, 101 an verschiedene andere Simulationssoftware zu koppeln. Die Schnittstelle 102 kann beispielsweise als Functional Mock-up Interface (FMI) ausgebildet sein.

Darüber hinaus ist den Figuren 2 und 3 zu entnehmen, dass, wenn ein bestimmtes Modell-Moduls des virtuellen Abbildes des Antriebsgeräts ausgewählt und konfiguriert wird, Auswählen und Konfigurieren wenigstens eines zusätzlichen, mit dem bereits ausgewählten und konfigurierten Modul zusammenhängenden Modell-Moduls notwendig sein kann, damit das zeitabhängige Simulationsmodell 100, 101 funktionsfähig ist. Das Auswählen und Konfigurieren solcher mit einem ausgewählten und konfigurierten Modell-Modul zusammenhängenden Modell-Module kann automatisch ablaufen. Dabei kann die Konfiguration dieser notwendigen Modell-Module einen vorbestimmten Detaillierungsgrad, beispielsweise LLoD haben. Das Physikmodell-Modul M6 weist beispielsweise einen LLoD-Detaillierungsgrad auf.

Sollte beispielsweise ein Stromregler-Modell-Modul ausgewählt werden, so muss ein Modul mit einem elektrischen Modell des Effektivwertverhaltens des Motors und der Versorgungseinheit mit ausgewählt werden.

Zusammenfassend zeigen Figur 2 und 3 Ausführungsbeispiele des erfindungsgemäßen zeitabhängigen Simulationsmodells, bei welchen das virtuelle Abbild des Antriebsgeräts mehrere Model-Module umfasst, wobei jedes Modell-Modul einzeln auswählbar und hinsichtlich seines Detaillierungsgrades konfigurierbar ist.

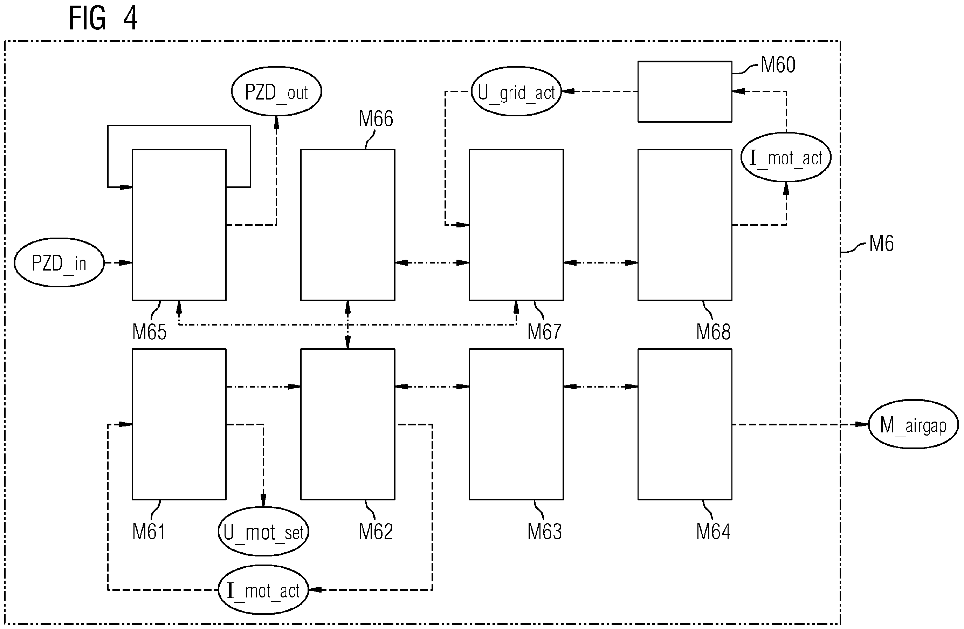

FIG 4 zeigt ein Beispiel des Transferfunktion-Modell-Moduls M6, welches neun weitere Sub-Module M60 bis M68 umfasst. Das Modul M60 ist ein (internes) Netzmodell; das Modul M61 ist ein Modell des Current-Controls; das Modul M62 ist ein Modell eines Motorumrichters; das Modul M63 ist ein Modell eines Filters/Kabels; das Modul M64 ist ein Modell eines Motors; das Modul M65 ist ein Modell eines Infeed-Controls; das Modul M66 ist ein Modell eines DC-Links und DC-Choppers; das Modul M67 ist ein Modell eines Infeed-Converters; das Model M68 ist ein Filter- und/oder Precharging- und/oder ein Breaker-Modell.

Die Module M60 bis M68 weisen noch weitere Ein- und Ausgaben aus: Motorspannungssollwert (U_mot_set), Motorstromistwert (I_mot_act), Prozessdatenwort Eingang/Ausgang zum Infeed-Control (PZD_in; PZD_out), Netzstromsollwert (I_grid_set), Netzspannungsistwert (U_grid_act).

Das Verhalten der Modelle in den Modulen M60, M62, M63, M64, M66, M67 und M68 kann durch ein gemeinsames System von Differenzialgleichungen beschrieben werden. Dies ist mit strichpunktierten Pfeilen in FIG 4 verdeutlicht. Diese Module sind Beispiele der Physikmodell-Modulen.

Jedem Modul des virtuellen Abbilds eine detaillierungsgradabhängige Abtastzeit zugeordnet ist. So kann beispielsweise beim Festlegen der zeitabhängigen Simulationsmodelle 100, 101 die Performance des Simulationsmodells im Rahmen des Funktionsumfangs optimiert werden. Nach herrschender Meinung hängt die Performance eines Simulationsmodells von der Abtastzeit ab. Je höher ist der Detaillierungsgrad der einzelnen Module, desto niedriger ist die Performance. Soll sich z.B. beim Definieren des Funktionsumfanges herausstellen, dass bei der Simulation des Antriebsgeräts, sine Simulation des Filters bzw. Kabels nicht relevant ist, kann dieses Modul entweder abgewählt oder durch ein Modell mit LLoD-Detaillierungsgrad beschrieben werden.

Wie bereits erläutert, können die zeitabhängigen Simulationsmodelle eine Schnittstelle aufweisen, über welche sie an verschiedene andere Simulationssoftware gekoppelt werden können.

Darüber hinaus ist durch die Konfiguration eines internen Netz- und Mechanikmodells und ohne PLC ein Standalone-Modell lauffähig und gültig.

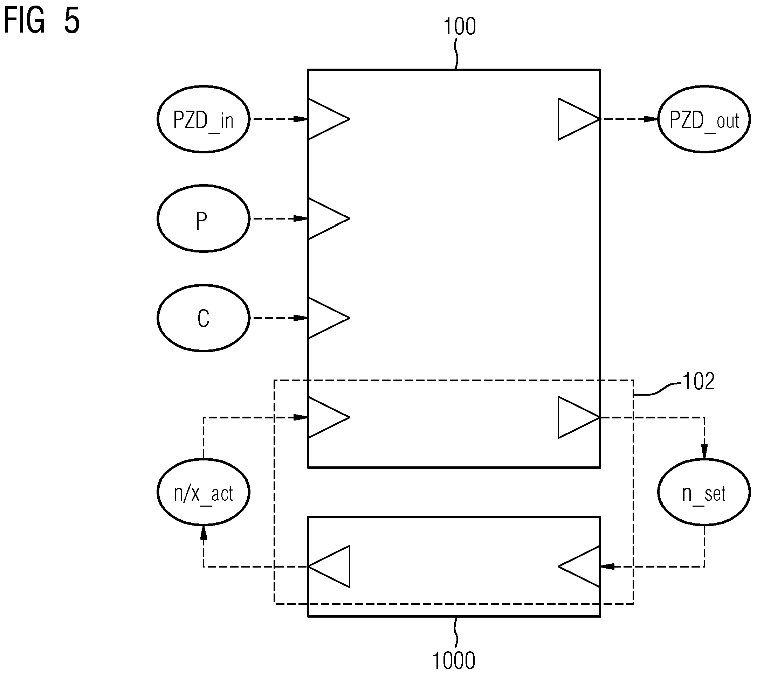

FIG 5 zeigt ein Ausführungsbeispiel, bei welchem das Simulationsmodell 100 an ein Modell 1000 einer Industrieanlage bzw. einer Automatisierungsanlage gekoppelt wird. Anschließend kann das Verhalten des Antriebsgeräts 1 in der Industrieanlage simuliert werden. Das Simulationsmodell 100 kann über die vorgenannte Schnittstelle 102 an das Modell 1000 gekoppelt werden. Drehzahl-Istwert (n_act), Positionsistwert (x_act) sind beispielhafte Ausgaben des Modells 1000, als Eingaben für das Simulationsmodell 100 verwendet werden können. Das Simulationsmodell 100 gibt den Drehzahl-Sollwert (n_set) aus, welcher als Eingabe für das Modell 1000 verwendet wird.

FIG 5 lässt noch zwei weitere Schnittstellen des Simulationsmodells 100 erkennen: Konfigurationsschnittstelle C, über welche beispielsweise bestimmte Module des vorgenannten virtuellen Abbildes des Antriebsgeräts 1 aus- und abgewählt werden können, und eine Schnittstelle P. Über die Schnittstelle P ist die azyklische Vorgabe von Parametern der Firmware möglich. Diese können zur Laufzeit änderbar sein.

Darüber hinaus können über die Konfigurationsschnittstelle C Parameter der entsprechenden Physikmodell-Module vorgegeben werden. Diese werden während der Initialisierungsphase angelegt und sind vorzugsweise während der Laufzeit nicht änderbar, z.B. wegen möglicher Beeinträchtigung der Abtastschrittweite. Die Konfigurationsschnittstelle C ist vorzugsweise anders als die anderen Schnittstellen weder zyklisch noch azyklisch modifizierbar.

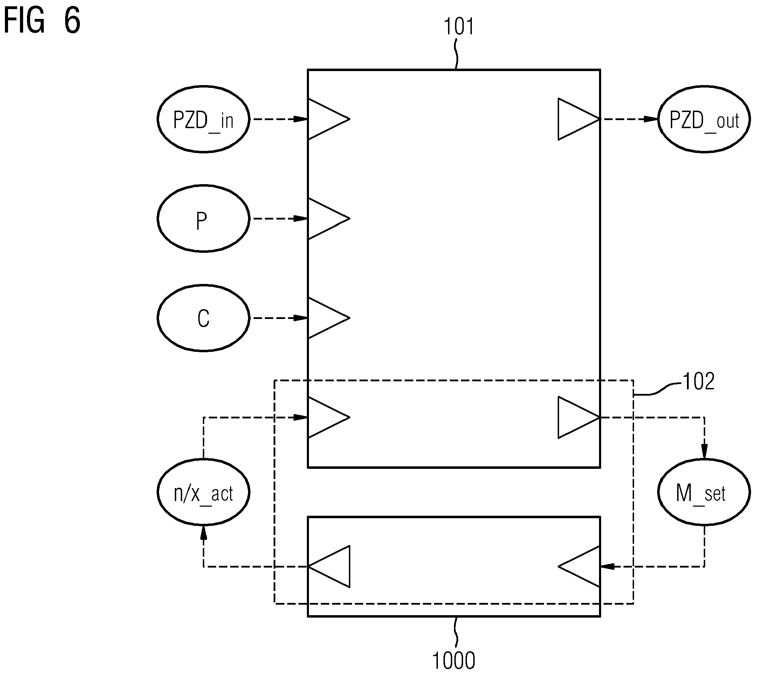

FIG 6 zeigt ein Ausführungsbeispiel, bei welchem das Simulationsmodell 101 an das Modell 1000 gekoppelt wird. Anschließend kann das Verhalten des Antriebsgeräts 1 in der Industrieanlage simuliert werden. Das Simulationsmodell 101 kann über die vorgenannte Schnittstelle 102 an das Modell 1000 gekoppelt werden. Dabei wird eine Ausgabe M set (Drehmoment-Sollwert) des Simulationsmodells 101 in das Modell 1000 eingespeist. Das Modell 1000 kann z.B. den Drehzahl-Istwert (n_act) und den Positionsistwert (x_act) ausgeben, die als Eingaben für das Simulationsmodell 100 verwendet werden können.

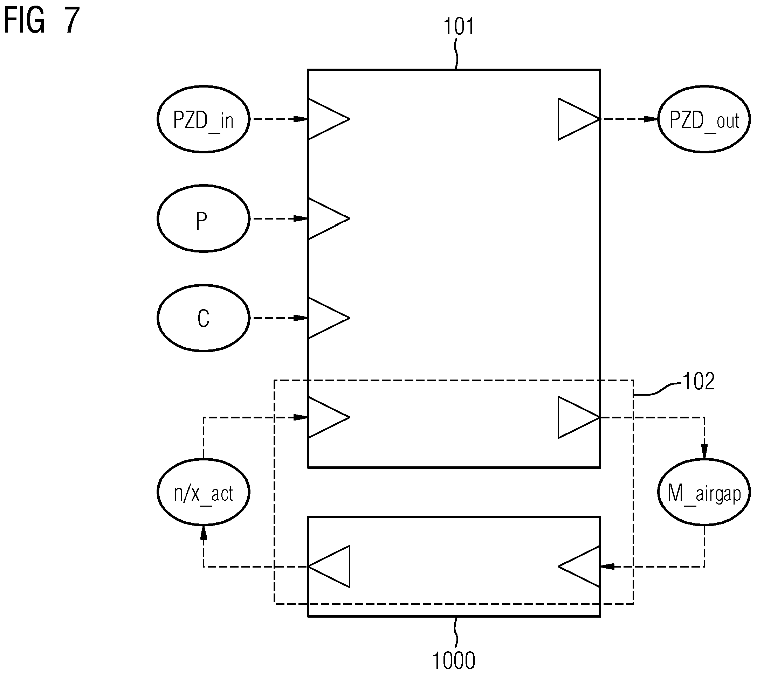

FIG 7 zeigt ein Ausführungsbeispiel, bei welchem - wie in FIG 6 - das Simulationsmodell 101 an das Modell 1000 gekoppelt wird, wobei eine Ausgabe M_airgap (Luftspaltdrehmomentistwert) des Simulationsmodells 101 in das Modell 1000 eingespeist wird.

Einer Zusammenschau der Figuren 5 bis lässt erkennen, dass je komplizierter das zeitabhängige Simulationsmodell ist, umso einfacher das Umgebungsmodell sein darf.

Zusammenfassend ermöglicht die Erfindung zeitbasierte Simulationsmodelle von Antrieben bereitzustellen, bei welchen der Anwender sich beispielsweise über eine Konfigurationsschnittstelle nur spezifische Aspekte des realen Antriebes für die Simulation aktiv schalten/instanziieren und deren Detaillierungsgrad variieren kann. Im Gegensatz zum realen Antrieb, benötigt das Modell diese nicht für die korrekte Abbildung einer bestimmten Funktion, die der Anwender darstellen möchte. Aufgrund dieser flexiblen Detaillierungsstufe können die nicht benötigten Aspekte des realen Antriebes weggelassen werden, was zu einer Zeitersparnis führen kann.

Wie im Rahmen der vorliegenden Offenbarung beschrieben, kann sich die flexible Detaillierungsstufe auf Teilaspekte der Software und/oder der Hardware beziehen (Firmware-Modell-Module und/oder Physikmodell-Module).

Wie bereits gezeigt kann ausgewählt werden, ob spezifische Regelungsteile in dem zeitbasierten Simulationsmodell enthalten sind, bzw. wie detailliert die Hardware in dem Modell abgebildet ist. So lässt sich bspw. nur die elektrische Domäne eines Systems abbilden, wobei diese wiederum mit wachsenden Detailgrad als Mittelwert-, Grundschwingungs- oder Oberschwingungsmodell ausgeführt sein kann.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Beispielsweise ist es aufgrund des flexiblen Inhaltes des zeitabhängigen Simulationsmodells möglich, für den Schluss von etwaigen Regelungsschleifen angebotene Schnittstellen der einzelnen Modulen zu nutzen oder diese entsprechend der Konfiguration innerhalb des Modells zu schließen, um beispielsweise Standalone-Modelle zu erhalten (siehe Figuren 2 bis 7, in welchen der Verlauf der Pfeile in einem vom Fachmann ohne Weiteres erkennbaren Rahmen verändert werden kann). Feingranulares Umschalten der Pfade (Pfeile) innerhalb eines Simulationsmodells ist möglich. Somit wird ein zeitabhängiges Simulationsmodell mit konfigurierbaren Modellbausteinen bereitgestellt.

An dieser Stelle sei betont, dass durch Auswählen und Konfigurieren von Modulen, die lediglich das Verhalten von internem Netz und interner Mechanik modellieren (PLC-Modell-Modul ist nicht ausgewählt) ein lauffähiges und gültiges zeitabhängiges Simulationsmodell bereitgestellt werden kann.

In den Figuren 2 und 3 ist z.B. eine Regelungsstrecke der rotatorischen Mechanik abgebildet. Die Erfindung ist aber nicht auf Abbildung der Regelungsstrecke der rotatorischen Mechanik beschränkt. Wie der Gesamtheit der vorliegenden Offenbarung zu entnehmen ist, kann das erfindungsgemäße zeitabhängige Simulationsmodell ein Temperaturmodell (Belüftungsdesign, z.B. bei Schaltschrankmodellierung, Rückkühlung bei Motoren etc.), Oberschwingungsverhalten (EMV), etc. umfassen. Diese sind z.B. keine Regelschleifen, sondern Systemreaktion/-verhalten (siehe z.B. Diskussion zu den Physikmodellen).

## Patentansprüche

1. Computerimplementiertes Verfahren zum Bereitstellen eines zeitabhängigen Simulationsmodells eines Antriebsgeräts (1), wobei das Antriebsgerät eine elektrische Maschine (3) und eine der elektrischen Maschine zugeordnete Versorgungseinheit umfasst, wobei
- (S1) ein Funktionsumfang des zeitabhängigen Simulationsmodells (100, 101) definiert wird,
- (S2) ein virtuelles Abbild des Antriebsgeräts (1) bereitgestellt wird, wobei das virtuelle Abbild modular aufgebaut ist, wobei jedes Modul (M1, M2, M3, M4, M5, M6, M60, M61, M62, M63, M64, M65, M66, M67, M68) des virtuellen Abbildes konfigurierbar ist,
- (S3) um das zeitabhängige Simulationsmodell (100, 101) des Antriebsgeräts (1) mit dem definierten Funktionsumfang festzulegen, entsprechend dem Funktionsumfang wenigstens ein Modul (M1, M2, M3, M4, M5, M6, M60, M61, M62, M63, M64, M65, M66, M67, M68) des virtuellen Abbildes ausgewählt und entsprechend dem Funktionsumfang das wenigstens eine Modul (M1, M2, M3, M4, M5, M6, M60, M61, M62, M63, M64, M65, M66, M67, M68) hinsichtlich seines Detaillierungsgrades konfiguriert wird.

2. Verfahren nach Anspruch 1, wobei jedem Modul (M1, M2, M3, M4, M5, M6, M60, M61, M62, M63, M64, M65, M66, M67, M68) des virtuellen Abbilds eine detaillierungsgradabhängige Abtastzeit zugeordnet ist.

3. Verfahren nach Anspruch 1 oder 2, wobei mehrere unterschiedliche Module (M1, M2, M3, M4, M5, M6, M60, M61, M62, M63, M64, M65, M66, M67, M68) des virtuellen Abbildes ausgewählt und hinsichtlich ihres Detaillierungsgrades konfiguriert werden.

4. Verfahren nach einem der Ansprüche 1 bis 3, wobei das wenigstens eine Modul (M1, M2, M3, M4, M5, M6, M60, M61, M62, M63, M64, M65, M66, M67, M68) zumindest eine Schnittstelle aufweist, wobei vorzugsweise bei mehreren Modulen (M1, M2, M3, M4, M5, M6, M60, M61, M62, M63, M64, M65, M66, M67, M68) diese miteinander verknüpft werden.

5. Verfahren nach einem der Ansprüche 1 bis 4, wobei das virtuelle Abbild ein Firmware-Modell des Antriebsgeräts und ein Physikmodell des Antriebsgeräts umfasst, wobei das Firmware-Modell und/oder das Physikmodell modular aufgebaut sind/ist, wobei jedes Firmware-Modell-Modul (M1, M2, M3) bzw. Physikmodell-Modul (M60, M62, M63, M64, M66, M67, M68) konfigurierbar ist.

6. Verfahren nach Anspruch 5, wobei die Versorgungseinheit eine Regelungseinrichtung (2) umfasst, und das Firmware-Modell ein Modell einer in der Regelungseinrichtung hardwaregebunden hinterlegten Software - ein erstes Modell - und ein Modell einer Regelungseinrichtung-Software - ein zweites Modell - beziehungsweise eine Kopie der Regelungseinrichtung-Software umfasst.

7. Verfahren nach Anspruch 5 oder 6, wobei das Physikmodell des Antriebsgeräts modular aufgebaut ist, wobei jedes Physikmodell-Modul ein Modell jeweils einer physikalischen Komponente des Antriebsgeräts ist, wobei vorzugsweise bei jedem Physikmodell-Modul mindestens eine zu simulierende physikalische Domäne auswählbar ist und ein Detaillierungsgrad der Simulation der mindestens einen zu simulierenden physikalischen Domäne konfigurierbar ist.

8. Verfahren nach einem der Ansprüche 1 bis 7, wobei das Auswählen und das Konfigurieren des wenigstens eines Moduls des virtuellen Abbildes zu einem automatischen Auswählen und Konfigurieren wenigstens eines weiteren, mit dem wenigstens einen Modul zusammenhängenden Moduls des virtuellen Abbildes führt.

9. Computergestütztes Verfahren zur Simulation des Verhaltens eines Antriebsgeräts (1), wobei
- ein zeitabhängiges Simulationsmodell (100, 101) nach einem der Ansprüche 1 bis 9 bereitgestellt wird,
- das zeitabhängige Simulationsmodell (100, 101) in ein Umgebungsmodell (1000) eingebunden wird, um das Verhalten des Antriebsgeräts (1) in der Umgebung zu simulieren.

10. Verwendung eines mit einem Verfahren nach einem der Ansprüche 1 bis 9 bereitgestellten Simulationsmodells (100, 101) zur Simulation eines Antriebsgeräts (1).

11. Computerprogramm umfassend Befehle, welche beim Ausführen des Computerprogramms durch einen Computer diesen dazu veranlassen, ein Verfahren nach einem der Ansprüche 1 bis 8 auszuführen.

12. System, insbesondere eine Engineering-Plattform, umfassend Mittel zur Ausführung eines Verfahrens nach einem der Ansprüche 1 bis 8 oder nach Anspruch 9.

13. Computerlesbares Speichermedium mit einem Computerprogramm nach Anspruch 11.

14. Datenstrom, der so angepasst ist, dass er ein Computerprogramm nach Anspruch 11 überträgt.
